# EUROPEAN PATENT SPECIFICATION

(11) **EP 0 536 168 B1**
(45) Date of publication and mention of the grant of the patent: **30.08.1995**
(21) Application number: 91910369.7
(22) Date of filing: 07.06.1991
(51) Int. Cl.: H04B 5/02

(54) **A DATA TRANSMISSION EQUIPMENT**
DATENÜBERTRAGUNGSEINRICHTUNG
EQUIPEMENT DE TRANSMISSION DE DONNEES

(30) Priority: 26.06.1990 FI 903205
(43) Date of publication of application: 14.04.1993
(73) Proprietor: IDESCO OY, SF-90570 Oulu (FI)
(72) Inventor: KALLIOMÄKI, Kalevi, SF-90540 Oulu (FI); MOILANEN, Markku, SF-90570 Oulu (FI); ELSILÄ, Martti, SF-90580 Oulu (FI); NUUTINEN, Tapio, SF-90460 Oulunsalo (FI)
(74) Representative: Lloyd, Patrick Alexander Desmond
(86) International application number: FI9100182
(87) International publication number: WO9200635

(56) References cited:
- WO-A-85/03831
- GB-A- 713 961
- US-A- 4 278 980
- US-A- 4 654 880
- DERWENT'S ABSTRACT, No. 83-746 454/34, SU 968 774, publ. week 8334.

## Description

The invention relates to a data transmission equipment comprising a first transceiver comprising first means for generating alternating current; a second transceiver comprising second means for generating alternating current and positioned apart from the first transceiver; and coupling means positioned in the first and the second transceiver for connecting the transceivers together by means of mutual inductance for transmission of data between said transceivers.

The data transmission equipment of the invention has a wide range of different applications, e.g. within measuring and identification techniques. As mutual inductance applications include the transmission of a signal from one place to another by generating an alternating current in the transmitter, the general term "transceiver" will be used in this text. If the equipment of the invention is applied in identification systems, for instance, one transceiver is usually a reading device while the other transceiver is a programmable or permanently programmable code carrier which will be called an identifier below. As described above, the term "transceiver" is used herein as a general term in place of which another term can be used, depending on the way the principle of the invention is applied in each particular case.

A major drawback of prior art data transmission or identification systems based on inductive coupling is that the wider the operating range, the more expensive and difficult the system is to manufacture, because the transceivers coils (identifiers in the identification systems) have to consist of many turns and be very large in diameter. On the other hand, the structure of at least one transceiver depends on its use, so that one particular structure cannot be applied for many purposes. Examples of the prior art are the identification systems disclosed in US Patent 4,752,776 and PCT Application WO 85/03831, and the data transmission equipment disclosed in German Offenlegungsschrift 3 412 588.

The object of the present invention is to eliminate the above problem and to provide an equipment the functional properties of which, such as the operating range, read direction or size, can be modified considerably more simply than previously in view of the manufacturing technique. As a consequence, the equipment is easy to modify for different uses and the standard structure has a wider range of applications. By means of the equipment described in the beginning, this is achieved by providing a flux transformer between said coupling means in association with at least one transceiver, the flux transformer comprising a primary coil and a secondary coil with unequal diameters, and by positioning one of the coils of the flux transformer close to the coupling means of said transceiver.

Flux transformers are known *per se* from biomagnetic measurements performed by magnetometers based on the SQUID (Superconducting Quantum Interference Device). In these applications, a super-conducting flux transformer is used to transfer the biomagnetic field to be measured farther from a patient as measurements requiring very low temperatures cannot be performed in close vicinity to the patient.

The basic idea of the invention is to use the previously known flux transformer in a data transmission equipment of the type described in the beginning in a different way than previously, i.e. as a matching means for making the coupling between the transceivers more effective. The flux transformer is positioned in the transmission path between the transceivers in such a way that a flux transformer coil of corresponding size will be positioned close to the coupling means of at least one of the transceivers. The flux transformer transmits magnetic energy between the coils so as to obtain flux densities suitable for appropriate operation of the transceivers.

By means of the solution of the invention, the operating range of the equipment can be increased by an additional structure very simple in view of the manufacturing technique. At the same time, the standard structure will have a wider range of applications as the flux transformer also provides a simple way of matching a transceiver of standard structure with transceivers of different types possibly placed at the other end of the transmission path. By means of the solution of the invention, the equipment may also be of module structure as different flux transformer modules can be positioned between transceivers of standard structure.

In a preferred embodiment of the invention, the flux transformer is fitted in the wrapping or package surrounding the body in which the transceiver is positioned. For identification purposes, for instance, the identifier being placed in the body to be identified (such as a tool), the read distance can be increased simply while the body remains identifiable even after the wrapping or package has been removed.

In the following the invention will be described in greater detail with reference to the examples of the attached drawings, in which
Figure 1 is a simplified block diagram of the first embodiment of the equipment of the invention;
Figure 2 is a perspective view of the positioning of a flux transformer in connection with an identifier;
Figure 3 shows the positioning of the flux transformer in the wrapping of an object to be identified or on its surface;
Figure 4 shows the positioning of the flux transformer in connection with a read/write unit; and
Figure 5 shows an alternative embodiment of the equipment of the invention.

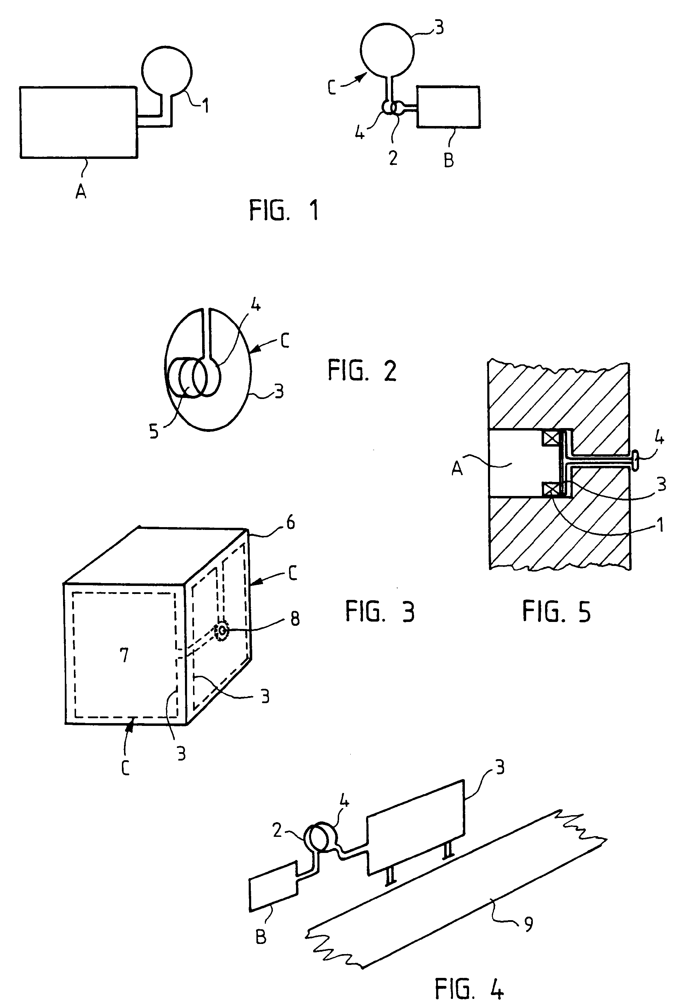

Figure 1 shows a block diagram of a data transmission equipment of the invention, comprising a transceiver A, and a transceiver B which is at a predetermined distance from the transceiver A. The transceiver A comprises a coil 1 to which the transceiver applies an alternating current signal containing desired information. The transceiver B, in turn, comprises a coil 2 to which the signal transmitted by the transceiver A is connected by means of the mutual inductance of the coils 1 and 2. This data transmission equipment may be, e.g., the identification equipment disclosed in the above-mentioned US Patent 4,752,776 or PCT Application WO 85/03831, in which the transceiver A corresponds to the reader/interrogator and the transceiver B to the transponders disclosed in them. Correspondingly, the transceiver A may be of the type disclosed in the above-mentioned German Offenlegungsschrift 3 41 2588, and the transceiver B may be a code carrier of the type disclosed in the Offenlegungsschrift. As the more detailed structure of the transceivers may vary in many ways and as it does not fall within the inventive idea, the structure will not be described more closely, but the above-mentioned publications, for instance, are referred to for more detailed structural examples. In the invention, the prior art equipment described above is completed with at least one flux transformer C, which is fitted in association with the transceiver B in the example of Figure 1. The flux transformer C comprises a large-diameter coil 3 consisting of a single turn and a coil 4 with a smaller diameter, and it is galvanically separated from the coil 2 and positioned in such a way that the coil 4 of smaller diameter in the flux transformer is close to the coil 2 of the transceiver B. The large-diameter coil 3 consisting of a single turn gathers, within the area of its transverse surface, the magnetic energy generated by the transmitting coil 1, and the field with increased flux density is transferred from the small-diameter coil 4 to the coil 2 of the transceiver B. Correspondingly, when the transceiver B acts as a transmitting part, the large-diameter coil 3 of the flux transformer C spreads the magnetic flux for reception, thus enabling a longer operating range.

The dimensions of the coils 3 and 4 of the flux transformer C depend, firstly, on the distance at which the field is to be transferred by means of the larger coil, and, secondly, on the structure of the transceiver in connection with which the smaller coil will be positioned. The shape of the coils may vary according to the requirements of each specific application. As compared with a circular coil, the ratio of the diameters of the coils of the flux transformer may range from 1:2 to 1:100, being typically of the order of 1:10. The number of turns of the coil with larger diameter is not necessarily one, as above, but there may be a few turns, e.g. 2 to 5. If the coil with larger diameter consists of a single turn, the smaller coil usually consists of 2 to 4 turns. The power transmitted by the flux transformer is at a maximum when the inductance of the smaller coil 4 is equal to the inductance of the larger coil 3, whereby the number of turns of the small coil is the number of turns of the larger coil multiplied with the square root of the ratio of the radii of the coils. Optimal power transmission is achieved when the diameter of the coil 1 is equal to the diameter of the coil 3 and the diameter of the coil 4 is equal to the diameter of the coil 2.

Figure 2 illustrates the use of the flux transformer of the invention when the transceiver B is an identifier which is used in the identification technique and in which electric parts are encased within a protective capsule 5. The flux transformer C is positioned at the side of the protective capsule, the diameter of which is typically 1 to 2 cm, in such a way that the protective capsule 5 will be positioned close to the smaller coil 4 either in close contact with it or inside it.

Figure 3 illustrates the positioning of the flux transformer in an object 6 to be identified, particularly inside a wrapping or package 7 fitted around its surface. An identifier 8 of the type shown in Figure 2 is positioned within the object to be identified, and one or more flux transformers C are positioned within the wrapping 7 surrounding the object. When several flux transformers are used, the coil 3 of larger diameter in each flux transformer is fitted on different sides of the object, as shown in the figure, while the coil 4 with smaller diameter is positioned in connection with the identifier 8, as described above. Similarly as in the example of Figure 3, the smaller coil 3 may be common to all the flux transformers C. Two or more flux transformers C enable the reception of magnetic field in different directions, so that the orientation or location of the object does not restrict the identification. The flux transformers can be removed from the object together with the wrapping 7, but the object 6 is still identifiable as the identifier 8 remains in position. Depending on the application, the flux transformer may also be installed directly on the surface of the object or it may be attached to an adhesive strip which is glued to the surface of the object 6 or the wrapping 7. One preferred embodiment of the solution of Figure 2 is to mark a paper roll (the diameter and height of which may be even several metres) by incorporating a flux transformer in the wrapping surrounding the roll or in the end piece of the roll, while the identifier is positioned in the core of the roll. In this way a long read distance can be provided at low costs, and the identifiability of the paper roll in the storeroom of a newspaper printing house is maintained even after the wrapping has been removed since the escort memory remains in the core.

Figure 4 illustrates the positioning of the flux transformer in the transceiver B, which in this particular case acts as a read/write unit beside a conveyor belt 9. Depending on each particular application, the larger coil 3 of the flux transformer may be a separately designed unit or it may form part of an existing structure, for instance, of a conveyor support structure, or it may be a safety railing or other similar surrounding structure.

Even though the small coil of the flux transformer is positioned close to the coil of the transceiver in all the above examples, it should be noted that the principle of the invention is applicable also in cases where the large coil is positioned close to the coil of the transceiver. In this way the coil of the transceiver can be miniaturized by means of the flux transformer. One example of such a structure is the transceiver A shown in Figure 5, in which the coil 1 has been miniaturized by positioning the large coil 3 of the flux transformer corresponding in size to the coil 1 of the transceiver close to said coil 1, while the small coil 4 is positioned at a greater distance from the transceiver A. In this way, the read unit, for instance, is able to read even through a small hole, or a standard identifier can be, e.g., protected by means of the flux transformer.

The flux transformer of the invention can be manufactured in various ways. The wire loops may be formed of copper wire or metal foil, for instance. They may also be realized by normal electronic conductor pattern techniques (growing, etching, silk screen printing) on circuit boards or other suitable substrates. As described above, part of the flux transformer can also be realized by means of structures already existing at the point of application (such as a metal frame). A solution very suitable for present-day series-production methods is to combine a flux transformer module accomplished by the circuit board technique, for instance, with a transceiver of standard structure. In this way the equipment can be used in many applications solely by changing the flux transformer module.

Even though the invention has been described above with reference to the example of the attached drawings, it is to be understood that the invention is not restricted to it but can be modified in various ways within the inventive idea disclosed in the attached claims. Even though the flux transformer is provided only in the transceiver positioned at one end of the transmission path, it is also possible to attach the flux transformer to both transceivers. In principle, it might be possible to use the flux transformer in an equipment in which the coupling means are not coils as in the above example but, e.g., aerials.

## Claims

1. Data transmission equipment comprising
- a first transceiver (A) comprising first means for generating alternating current;
- a second transceiver (B) comprising second means for generating alternating current and positioned apart from the first transceiver (A); and
- coupling means (1, 2) positioned in the first and the second transceiver (A, B) for connecting the transceivers together by means of mutual inductance for transmission of data between said transceivers (A, B), **characterized** in that a flux transformer (C) is provided between said coupling means (1, 2) in association with at least one transceiver (A; B), the flux transformer (C) comprising a primary coil and a secondary coil (3, 4) with unequal diameters, and that one of the coils (3; 4) of the flux transformer (C) is positioned close to the coupling means (1; 2) of said transceiver (A; B).

2. Equipment according to claim 1, wherein the coupling means are formed by coils (1, 2), **characterized** in that the size of the transmitting coil (1) of the transmitting transceiver (A) or that of the larger coil (3) of the flux transformer provided in association with it is of the same order as the size of the larger coil (3) of the flux transformer (C) provided in association with the receiving transceiver (B).

3. Equipment according to claim 1 or 2, **characterized** in that the coil (3) of larger diameter in the flux transformer (C) comprises 1 to 5 turns.

4. Equipment according to any of the preceding claims, **characterized** in that the ratio of the diameters of the coils (3, 4) of the flux transformer (C) is between 1:2 and 1:100.

5. Equipment according to any of the preceding claims, **characterized** in that the flux transformer (C) is fitted in an object in which a transceiver (8) is positioned or in the wrapping or package (7) surrounding the object (6).

6. Equipment according to claim 5, **characterized** in that a plurality of flux transformers (C) are fitted in the object, its wrapping or package (7) in such way that the coils (3) of larger diameter in the flux transformers are positioned on different sides of the object (6).

7. Equipment according to any of claims 1 to 4, **characterized** in that the flux transformer (C) is fitted in a metal structure positioned close to the transceiver (B).

## Patentansprüche

1. Datenübertragungseinrichtung mit
- einem ersten Sende-Empfänger (A) mit ersten Einrichtungen zur Erzeugung von Wechselstrom;
- einem zweiten Sende-Empfänger (B) mit zweiten Einrichtungen zur Erzeugung von Wechselstrom, der vom ersten Sende-Empfänger (A) entfernt angeordnet ist; und
- Kopplungseinrichtungen (1, 2), die im ersten und zweiten Sende-Empfänger (A, B) angeordnet sind und die Sende-Empfänger über wechselseitige Induktanz zur Übertragung von Daten zwischen den Sende-Empfängern (A, B) miteinander verbinden, dadurch gekennzeichnet, daß ein Flußwandler (C) zwischen den Kopplungseinrichtungen (1, 2) in Zuordnung zu mindestens einem Sende-Empfänger (A; B) angeordnet ist, der eine Primärspule und eine Sekundärspule (3, 4) mit ungleichen Durchmessern aufweist, und daß eine der Spulen (3; 4) des Flußwandlers (C) eng benachbart zu den Kopplungseinrichtungen (1; 2) des Sende-Empfängers (A; B) angeordnet ist.

2. Einrichtung nach Anspruch 1, bei der die Kopplungseinrichtungen durch Spulen (1, 2) gebildet sind, dadurch gekennzeichnet, daß die Größe der Sendespule (1) des sendenden Sende-Empfängers (A) oder der größeren Spule (3) des in Zuordnung damit vorgesehenen Flußwandlers in der gleichen Größenordnung liegt wie die Größe der größeren Spule (3) des in Verbindung mit dem empfangenden Sende-Empfänger (B) vorgesehenen Flußwandlers (C).

3. Einrichtung nach Anspruch 1 oder 2, dadurch gekennzeichnet, daß die Spule (3) mit größerem Durchmesser im Flußwandler (C) 1 bis 5 Windungen aufweist.

4. Einrichtung nach einem der vorangehenden Ansprüche, dadurch gekennzeichnet, daß das Verhältnis der Durchmesser der Spuler (3, 4) des Flußwandlers (C) zwischen 1:2 und 1:100 liegt.

5. Einrichtung nach einem der vorangehenden Ansprüche, dadurch gekennzeichnet, daß der Flußwandler (C) in einen Gegenstand, in dem ein Sende-Empfänger (B) angeordnet ist, oder in die den Gegenstand (6) umgebende Umhüllung oder Verpackung (7) eingebaut ist.

6. Einrichtung nach Anspruch 5, dadurch gekennzeichnet, daß eine Vielzahl von Flußwandlern (C) derart in den Gegenstand, dessen Umhüllung oder Verpackung (7) eingebaut ist, daß die Spulen (3) mit größerem Durchmesser der Flußwandler auf unterschiedlichen Seiten des Gegenstandes (6) angeordnet sind.

7. Einrichtung nach einem der Ansprüche 1 bis 4, dadurch gekennzeichnet, daß der Flußwandler (C) in einer Metallstruktur angeordnet ist, die eng benachbart zum Sende-Empfänger (B) angeordnet ist.

## Revendications

1. Installation de transmission de données, qui comprend :
- un premier émetteur-récepteur (A) comportant un premier moyen pour produire un courant alternatif,
- un second émetteur-récepteur (B) comportant un second moyen pour produire un courant alternatif et disposé à distance du premier émetteur-récepteur (A), et
- des moyens de couplage (1, 2) placés dans les premier et second émetteurs-récepteurs (A, B) pour coupler ensemble les émetteurs-récepteurs au moyen d'une inductance mutuelle en vue de la transmission de données entre lesdits émetteurs-récepteurs (A, B), caractérisée en ce qu'un transformateur de flux (C) est placé entre lesdits moyens de couplage (1, 2), en association avec l'un au moins des émetteurs-récepteurs (A, B), le transformateur de flux (C) comprenant une bobine primaire et une bobine secondaire (3, 4) de diamètres différents, et en ce que l'une des bobines (3, 4) du transformateur de flux (C) est placée à proximité des moyens de couplage (1, 2) desdits émetteurs-récepteurs (A, B).

2. Installation selon la revendication 1, dans laquelle les moyens de couplage sont formés par des bobines (1, 2), caractérisée en ce que la taille de la bobine de transmission (1) de l'émetteur-récepteur (A) qui émet ou celle de la plus grosse bobine (3) du transformateur de flux qui lui est associé est du même ordre de grandeur que la taille de la plus grosse bobine (3) du transformateur de flux (C) qui est associé à l'émetteur-récepteur (B) qui reçoit.

3. Installation selon la revendication 1 ou 2, caractérisée en ce que la bobine (3) de plus grand diamètre du transformateur de flux (C) contient de 1 à 5 spires.

4. Installation selon l'une quelconque des précédentes revendications, caractérisée en ce que le rapport des diamètres des bobines (3, 4) du transformateur de flux (C) est compris entre 1 : 2 et 1 : 100.

5. Installation selon l'une quelconque des précédentes revendications, caractérisée en ce que le transformateur de flux (C) est logé dans un objet dans lequel est placé un émetteur-récepteur (8) ou bien dans l'enveloppe ou le boîtier (7) qui entoure cet objet (6).

6. Installation selon la revendication 5, caractérisée en ce que plusieurs transformateurs de flux (C) sont logés dans l'objet, son enveloppe ou son boîtier (7), de telle manière que les bobines (3) de plus grand diamètre des transformateurs de flux soient placées sur différents côtés de l'objet (6).

7. Installation selon l'une quelconque des revendications 1 à 4, caractérisée en ce que le transformateur de flux (C) est logé dans une structure métallique placée à proximité de l'émetteur-récepteur (B).
